# EUROPEAN PATENT SPECIFICATION

(11) **EP 4 043 243 B1**
(45) Date of publication and mention of the grant of the patent: **08.04.2026**
(21) Application number: 20895896.7
(22) Date of filing: 22.06.2020
(51) Int. Cl.: B60C 11/00, B60C 11/03, B60C 11/12, B60C 11/04

(54) **PNEUMATIC TIRE**
LUFTREIFEN
BANDAGE PNEUMATIQUE

(30) Priority: 05.12.2019 JP 2019220448
(43) Date of publication of application: 17.08.2022
(73) Proprietor: BRIDGESTONE CORPORATION, Chuo-ku Tokyo 104-8340 (JP)
(72) Inventor: YUMII Keita, Tokyo 104-8340 (JP)
(74) Representative: Marks & Clerk LLP
(86) International application number: PCT/JP2020/024394
(87) International publication number: WO 2021/111663

(56) References cited:
- EP-B1- 2 895 338
- WO-A1-2018/158546
- JP-A- 2006 051 863
- JP-A- 2011 509 213
- JP-A- 2013 505 874
- JP-A- 2013 539 735
- JP-A- 2017 193 202
- JP-A- 2019 189 201
- US-A1- 2011 168 311
- US-A1- 2013 263 984
- US-A1- 2015 283 863

## Description

### TECHNICAL FIELD

The present invention relates to a pneumatic tire.

### BACKGROUND

As technology for enhancing the quietness of a tire during vehicle driving, it has been proposed to reduce the air column resonance sound by providing resonators on the tread surface of the tire. For example, see Patent Literature (PTL) 1. Attention is also drawn to the disclosures of US2011/168311A1, WO2018/158546A1, EP2895338B1, US2013/263984A1 and US2015/283863A1.

### CITATION LIST

### Patent Literature

PTL 1: JP 2017-185889 A

### SUMMARY

### (Technical Problem)

Although the technology described in PTL 1 can reduce the air column resonance sound, the resonators arranged in the tire circumferential direction themselves become a source of pattern noise, leading to a risk that the quietness of the tire might not be sufficiently obtained. In particular, for resonators provided in a land portion defined by two circumferential main grooves, it is necessary to increase the size of the resonator, for example, to reduce the air column resonance sound of the two circumferential main grooves. The problem of increased pattern noise consequently becomes more pronounced.

The present invention aims to provide a pneumatic tire with enhanced quietness by reducing air column resonance sound while reducing pattern noise.

### (Solution to Problem)

The present invention provides a pneumatic tire as claimed in claim 1.

Here, the "tread surface" refers to the entire tread surface in the tire circumferential direction that comes into contact with the road surface when the pneumatic tire is mounted on an applicable rim, filled to a prescribed internal pressure, and subjected to the maximum load.

The "circumferential main groove" refers to a groove extending in the tire circumferential direction and having an opening width of 2 mm or more at the aforementioned tread surface when the pneumatic tire is mounted on an applicable rim, filled to a prescribed internal pressure, and under no load.

The "widthwise sipe" refers to a sipe extending in the tire width direction and having an opening width of less than 2 mm at the aforementioned tread surface when the pneumatic tire is mounted on an applicable rim, filled to a prescribed internal pressure, and under no load.

The "circumferential sipe" refers to a sipe extending in the tire circumferential direction and having an opening width of less than 2 mm at the aforementioned tread surface when the pneumatic tire is mounted on an applicable rim, filled to a prescribed internal pressure, and under no load.

In the present specification, the "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. (In other words, the "rim" encompasses not only current sizes but also sizes that may be included in industrial standards in the future. An example of the "size that will be described in the future" is the size described under "future developments" in the ETRTO Standards Manual 2013). In the case of a size not specified in the aforementioned industrial standards, the "rim" refers to a rim whose width corresponds to the bead width of the tire.

The "prescribed internal pressure" represents the air pressure (maximum air pressure) corresponding to the maximum load capability of a single wheel in an applicable size/ply rating described by the aforementioned JATMA or the like. In the case of a size not listed in the industrial standards, the "prescribed internal pressure" refers to the air pressure (maximum air pressure) corresponding to the maximum load capability prescribed for each vehicle on which the tire is mounted.

The "maximum load" refers to the load corresponding to the aforementioned maximum load capability.

In the present description, the "diameter" of the hole refers to the maximum diameter in a cross-section orthogonal to the extending direction of the hole.

### (Advantageous Effect)

According to the present invention, a pneumatic tire with enhanced quietness by reducing air column resonance sound while reducing pattern noise can be provided.

### BRIEF DESCRIPTION OF THE DRAWINGS

In the accompanying drawings:
FIG. 1 is a developed view schematically illustrating a tread pattern of a pneumatic tire according to an example, which is not according to the present invention, but which is useful for understanding the present invention;
FIG. 2 is a transparent perspective view illustrating a widthwise sipe, a hole, and a circumferential sipe in the example illustrated in FIG. 1;
FIG. 3 is a transparent perspective view illustrating widthwise sipes, holes, and a circumferential sipe in another example, which is not according to the present invention, but which is useful for understanding the present invention;
FIG. 4 is a transparent perspective view illustrating widthwise sipes, a hole, and a circumferential sipe in yet another example, which is not according to the present invention, but which is useful for understanding the present invention; and
FIG. 5 is a developed view schematically illustrating a tread pattern of a pneumatic tire according to an embodiment of the present invention.

### DETAILED DESCRIPTION

Examples, and an embodiment of the present invention, are described below in detail with reference to the drawings.

The internal structure and the like of the pneumatic tire (hereinafter referred to simply as the tire) can be the same as those of conventional tires. As an example, the tire can have a pair of bead portions, a pair of sidewall portions connected to the pair of bead portions, and a tread portion disposed between the pair of sidewall portions. The tire can also have a carcass extending toroidally between the pair of bead portions and a belt disposed on the radially outward side of a crown portion of the carcass.

Unless otherwise specified, the dimensions and the like refer to the dimensions and the like when the tire is mounted on an applicable rim, filled to the prescribed internal pressure, and under no load.

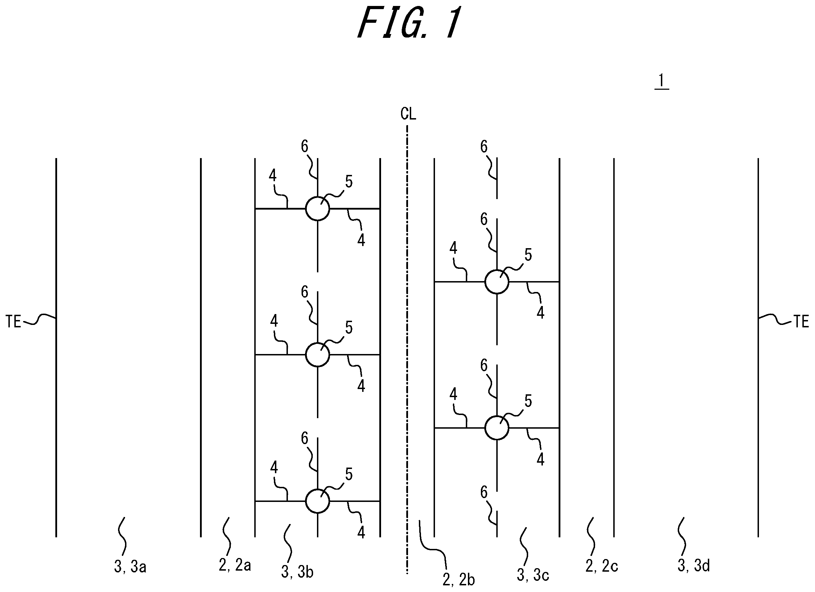

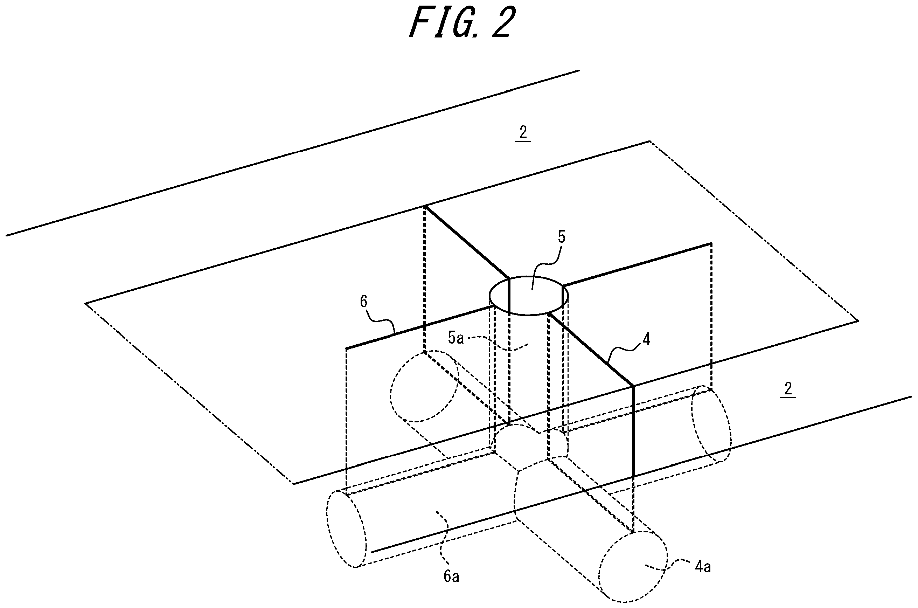

FIG. 1 is a developed view schematically illustrating a tread pattern of a pneumatic tire according to an example, which is not according to the present invention, but which is useful for understanding the present invention. FIG. 2 is a transparent perspective view illustrating a widthwise sipe, a hole, and a circumferential sipe.

As illustrated in FIG. 1, the tire of the present example includes, on a tread surface 1, two or more (three in the illustrated example) circumferential main grooves 2 (2a, 2b, 2c) extending in the tire circumferential direction, and a plurality (four in the illustrated example) of land portions 3 (3a, 3b, 3c, 3d) defined by circumferential main grooves 2 adjacent in the tire width direction among the plurality of circumferential main grooves 2, or by the circumferential main grooves 2 (2a, 2c) and the tread edges TE. Here, the "tread edges TE" refer to the outermost points of the aforementioned tread surface on both sides in the tire width direction. In the present example, the circumferential main groove 2b is positioned on the tire equatorial plane CL, and the circumferential main grooves 2a, 2c are respectively positioned in one half and the other half, in the tire width direction, divided by the tire equatorial plane CL. A configuration in which no circumferential main groove is located on the tire equatorial plane CL (in which a land portion is located on the tire equatorial plane CL) can also be adopted. In the illustrated example, each of the land portions 3a to 3d is a rib-like land portion that is not completely divided in the tire circumferential direction by a widthwise groove extending in the tire width direction. The "widthwise groove" refers to a groove extending in the tire width direction and having an opening width of 2 mm or more at the aforementioned tread surface when the pneumatic tire is mounted on an applicable rim, filled to a prescribed internal pressure, and under no load.

The groove width (opening width (opening width measured perpendicular to the extending direction of the groove in plan view)) of the circumferential main groove 2 is not particularly limited, since the groove width also depends on the number of circumferential main grooves 2, but can, for example, be between 3 mm and 15 mm. Similarly, the groove depth (maximum depth) of the circumferential main groove 2 is not particularly limited but can, for example, be between 14 mm and 20 mm.

In the illustrated example, the circumferential main grooves 2 all extend along the tire circumferential direction (without inclination) in plan view of the tread surface 1, but at least one of the circumferential main grooves 2 may extend at an inclination relative to the tire circumferential direction. In this case, the circumferential main groove 2 may be inclined at an angle of, for example, 5° or less relative to the tire circumferential direction. In the illustrated example, all of the circumferential main grooves 2 extend straight in the tire circumferential direction, but at least one of the circumferential main grooves 2 may have a shape such as a zigzag shape or a curved shape.

In the illustrated example, the land portions 3a, 3d located outermost in the tire width direction do not have grooves or sipes. This configuration increases the rigidity of the land portions and improves the steering stability. The land portions located outermost in the tire width direction may, however, be provided with widthwise grooves, circumferential sipes, and/or widthwise sipes (one or more of any one or more types) as appropriate.

In the illustrated example, the land portions (3b, 3c) defined by two circumferential main grooves include widthwise sipes 4 extending in the tire width direction from each of the two circumferential main grooves, circumferential sipes 6 extending in the tire circumferential direction, and holes 5 connected to the circumferential sipes 6.

The widthwise sipes 4 extend in the tire width direction from each of the two circumferential main grooves 2. The widthwise sipes 4 are connected to the circumferential sipes 6 or to the holes 5 (to the holes 5 in the illustrated example). The number of widthwise sipes 4 can be appropriately set.

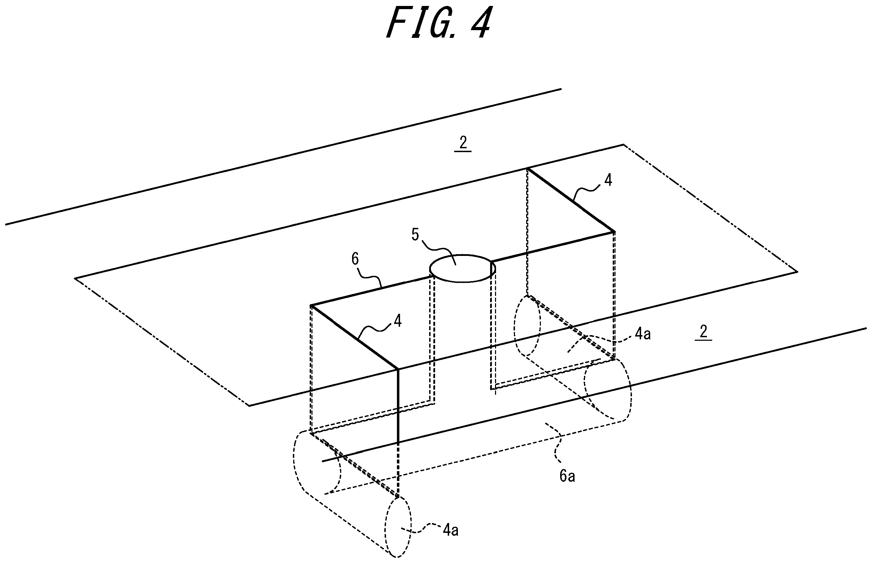

The widthwise sipes 4 extending in the tire width direction from each of the two circumferential main grooves 2 can be aligned in the tire circumferential direction, as in the example illustrated in FIG. 1, or can be shifted in phase in the tire circumferential direction, as in the example illustrated in FIG. 4 (explained in detail below).

Here, the sipe width (opening width (opening width measured perpendicular to the extending direction of the sipe)) of the widthwise sipe 4 is not particularly limited, since the sipe width also depends on the number of widthwise sipes 4, but can, for example, be between 0.6 mm and 1.2 mm. Similarly, the sipe depth (maximum depth) of the widthwise sipe 4 is not particularly limited but can, for example, be between 14 mm and 20 mm.

In the illustrated example, each widthwise sipe 4 of each land portion 3b, 3c extends straight without inclination relative to the tire width direction but may instead extend at an inclination relative to the tire width direction. In the case in which the widthwise sipe 4 extends at an inclination relative to the tire width direction, the widthwise sipe 4 is preferably inclined relative to the tire width direction at an inclination angle of 35° or less, and is more preferably inclined at an inclination angle of 25° or less. The inclination angles of the widthwise sipes 4 relative to the tire width direction can differ between land portions 3. The inclination angles of a plurality of widthwise sipes 4 relative to the tire width direction can also be the same or different within a land portion 3.

In the illustrated example, all of the widthwise sipes 4 extend straight in the tire width direction, but at least one of the widthwise sipes 4 may have a bent portion.

As illustrated in FIG. 2, the widthwise sipe 4 has a first widened portion 4a on the sipe bottom side, at which the sipe width is larger than on the tread surface 1 side. The maximum width of the first widened portion 4a is preferably 2 to 10 times the opening width at the tread surface 1.

In the present example, the first widened portion 4a has a circular shape in a cross-section orthogonal to the extending direction but can instead have various other shapes, including an elliptical shape (the major axis being in any direction), or a polygonal shape such as a rectangular shape. The extension length of the first widened portion 4a in the depth direction of the sipe is not particularly limited but can be 20% to 50% of the depth of the widthwise sipe 4.

The first widened portion 4a is preferably provided at the groove bottom but can instead be provided at a location 20% to 40% of the sipe depth from the groove bottom, for example. In this case, the region farther inward in tire radial direction than the first widened portion 4a can be a flat sipe (like the region farther outward in tire radial direction than the first widened portion 4a).

The hole 5 is connected to the circumferential sipe 6. The hole 5 is cylindrical in the present example, as illustrated in FIGS. 1 and 2, and is circular in plan view in the present example, but this example is not according to the present invention. Alternatively, the hole 5 can have various other shapes in plan view, including an elliptical shape (the major axis being in any direction), or a polygonal shape such as a rectangle. As illustrated in FIG. 2, the hole 5 has a circular shape in a cross-section orthogonal to the extending direction in the present example. Alternatively, this cross-sectional shape can be any of various shapes including an elliptical shape (the major axis being in any direction), or a polygonal shape such as a rectangular shape.

In the present example, the hole 5 has a constant cross-sectional shape and diameter in the depth direction (extending direction), but the cross-sectional shape and diameter may vary. In this case, the hole 5 preferably includes a portion in which the diameter of the hole increases from the outside to the inside in the tire radial direction. This configuration can improve the drainage performance when wear progresses. To connect to the first widened portion 4a and/or the second widened portion 6a (described below), this portion can be aligned in the tire radial direction with the first widened portion 4a and/or the second widened portion 6a, or can be disposed at a different position (in this case, connected to communicate in the tire radial direction).

The hole 5 is preferably provided to be at least partially located at the central position when the land portions 3b, 3c are divided into three equal parts in the tire width direction. This can secure the distance between the circumferential main grooves 2 and the hole 5 so that the rigidity of the land portion does not locally decrease.

The diameter of the hole 5 also depends on the number of holes and is therefore not particularly limited but may, for example, be from 1 mm to 3 mm for small tires for a passenger car and from 5 mm to 15 mm for truck/bus tires.

In the illustrated example, the circumferential sipes 6 are located at the central position when the land portions 3b, 3c are divided into three equal parts in the tire width direction. Each circumferential sipe 6 is connected to the hole 5 on the tread surface 1.

The number of the circumferential sipes 6 can be set as appropriate, depending also on the number of widthwise sipes 4 described above. Here, the sipe width (opening width (opening width measured perpendicular to the extending direction of the circumferential sipe)) of the circumferential sipe 6 is not particularly limited, since the sipe width also depends on the number of circumferential sipes 6, but can, for example, be between 0.6 mm and 1.2 mm. Similarly, the sipe depth (maximum depth) of the circumferential sipe 6 is not particularly limited but can, for example, be between 14 mm and 20 mm.

In the illustrated example, each circumferential sipe 6 of each land portion 3b, 3c extends straight without inclination relative to the tire circumferential direction but may instead extend at an inclination relative to the tire circumferential direction. In the case in which the circumferential sipe 6 extends at an inclination relative to the tire width direction, the circumferential sipe 6 is preferably inclined relative to the tire circumferential direction at an inclination angle of 45° or less, and is more preferably inclined at an inclination angle of 30° or less. The inclination angles of the circumferential sipes 6 relative to the tire circumferential direction can differ between land portions 3. The inclination angles of a plurality of circumferential sipes 6 relative to the tire circumferential direction can also be the same or different within a land portion 3.

In the illustrated example, all of the circumferential sipes 6 extend straight in the tire circumferential direction, but at least one of the circumferential sipes 6 may have a bent portion.

In the illustrated example, the holes 5 are arranged in a staggered pattern (so as not to overlap when projected in the tire width direction) between the two land portions 3b, 3c that are adjacent in the tire width direction. This achieves a uniform balance of rigidity over the entire tread pattern. The holes 5 may, however, be arranged to have an overlapping portion, when projected in the tire width direction, between the two land portions 3b, 3c that are adjacent in the tire width direction.

As illustrated in FIG. 2, the circumferential sipe 6 has a second widened portion 6a on the sipe bottom side, at which the sipe width is larger than on the tread surface 1 side. The maximum width of the second widened portion 6a is preferably 2 to 10 times the opening width at the tread surface 1.

In the present example, the second widened portion 6a has a circular shape in a cross-section orthogonal to the extending direction but can instead have various other shapes, including an elliptical shape (the major axis being in any direction), or a polygonal shape such as a rectangular shape. The extension length of the second widened portion 6a in the depth direction of the sipe is not particularly limited but can be 20% to 50% of the depth of the circumferential sipe 6.

The second widened portion 6a is preferably provided at the groove bottom but can instead be provided at a location 20% to 40% of the sipe depth from the groove bottom, for example. In this case, the region farther inward in tire radial direction than the second widened portion 6a can be a flat sipe (like the region farther outward in tire radial direction than the second widened portion 6a).

As illustrated in FIG. 2, the hole 5, the first widened portion 4a, and the second widened portion 6a are connected. In the illustrated example, the depth of the hole 5, the depth of the widthwise sipe 4, and the depth of the circumferential sipe 6 are equal. Also, in the illustrated example, the diameter of the first widened portion 4a of the widthwise sipe 4 and the diameter of the second widened portion 6a of the circumferential sipe 6 are equal. The first widened portion 4a and the second widened portion 6a are thereby connected at the sipe bottom (orthogonally in the present example). In the illustrated example, the hole 5 extends in the tire radial direction to connect to the intersection between the first widened portion 4a and the second widened portion 6a. Therefore, in the present example, the hole 5, the first widened portion 4a, and the second widened portion 6a are all connected to each other. In other words, the hole 5 and the first widened portion 4a are (directly) connected, the first widened portion 4a and the second widened portion 6a are (directly) connected, and the second widened portion 6a and the hole 5 are (directly) connected.

The effects of the pneumatic tire according to the present example are described below.

The pneumatic tire of the present example includes widthwise sipes 4 extending in the tire width direction from the two circumferential main grooves 2, and the widthwise sipes 4 are connected to the holes 5 in the illustrated example. The hole 5, the first widened portion 4a, and the second widened portion 6a are connected.

As a result, the widthwise sipe 4, the circumferential sipe 6, and the hole 5 can function as a resonator, with the widthwise sipe 4 acting as a narrowed neck, and the space formed by the connected hole 5, first widened portion 4a, and second widened portion 6a serving the role of an air chamber. The air column resonance sound produced by the two circumferential main grooves 2 can thereby be reduced.

Furthermore, since the volume of the air chamber is secured at the bottom of the sipe, only the area of the hole 5 is required as the area of the groove on the tread surface 1, and the area of the groove can be kept small. Pattern noise can thereby also be reduced (compared to the case in which the air chamber is provided on the tread surface).

The hole 5 being connected to the first widened portion 4a and the second widened portion 6a at the bottom side also has the following effects. In the initial stage of wear, drainage from the hole 5 to the first widened portion 4a and second widened portion 6a is promoted, thereby improving the drainage performance. After wear progresses (when the first widened portion 4a and the second widened portion 6a are exposed as the tread surface), the widened portions respectively function as a widthwise groove and a circumferential groove, thereby also improving the drainage performance after wear progresses.

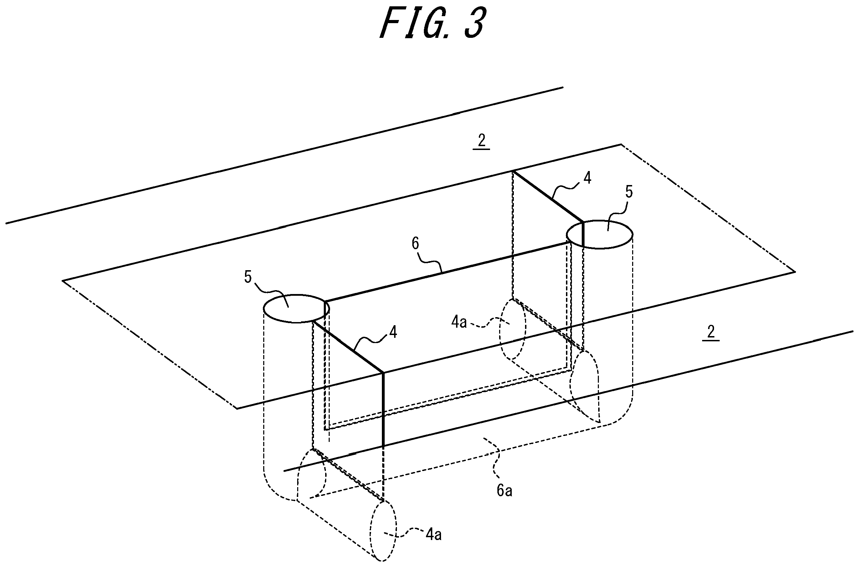

In the example illustrated in FIG. 1, the hole 5, the first widened portion 4a, and the second widened portion 6a are all connected to each other, thereby particularly improving the drainage performance. Compared to the example illustrated in FIG. 3 below, for example, the total area of the holes 5 can be reduced for a circumferential sipe 6 of the same circumferential length, thereby ensuring the rigidity of the land portion and improving the steering stability.

FIG. 3 is a transparent perspective view illustrating widthwise sipes, holes, and a circumferential sipe in another example.

First, two holes 5 are illustrated in FIG. 3, and each hole 5 can be similar to the hole 5 of the example illustrated in FIG. 1. Hence, a description of the holes 5 is omitted.

Next, in the example illustrated in FIG. 3, the circumferential sipe 6 extends in the tire circumferential direction (without inclination in the illustrated example) to connect the two holes 5. Like the example illustrated in FIG. 1, the circumferential sipe 6 includes a second widened portion 6a on the sipe bottom side, at which the sipe width is larger than on the tread surface 1 side. Since the configuration of the circumferential sipe 6 itself can be similar to the hole 5 of the example illustrated in FIG. 1, a description is omitted.

Next, in the example illustrated in FIG. 3, only one widthwise sipe 4 is connected to one hole 5. A widthwise sipe 4, extending in the tire width direction from the circumferential main groove 2 adjacent on one side in the tire width direction to one of the two holes 5 that are adjacent in the tire circumferential direction and connecting to the one hole 5, and another widthwise sipe 4, extending in the tire width direction from the circumferential main groove 2 adjacent to the other hole 5 on the other side in the tire width direction and connecting to the other hole 5, are arranged in the tire circumferential direction (while not illustrated, these widthwise sipes 4 are arranged to alternate in the tire circumferential direction). Like the example illustrated in FIG. 1, the widthwise sipe 4 includes a first widened portion 4a on the sipe bottom side, at which the sipe width is larger than on the tread surface 1 side. Since the configuration of each widthwise sipe 4 itself can be similar to the widthwise sipe 4 of the example illustrated in FIG. 1, a description is omitted. In the illustrated example, the first widened portion 4a has an elliptical shape with the major axis in the tire radial direction in a cross-sectional view.

In the example illustrated in FIG. 3 as well, the hole 5, the first widened portion 4a, and the second widened portion 6a are connected. Specifically, in the example illustrated in FIG. 3, the second widened portion 6a is (directly) connected to the two holes 5, and the two first widened portions 4a are each (directly) connected to one of the two holes 5. The first widened portion 4a and the second widened portion 6a are indirectly connected via the holes 5.

With the example illustrated in FIG. 3 as well, the widthwise sipes 4, the circumferential sipe 6, and the holes 5 can function as a resonator, with the widthwise sipes 4 acting as a narrowed neck, and the space formed by the connected holes 5, first widened portions 4a, and second widened portion 6a serving the role of an air chamber. The air column resonance sound produced by the two circumferential main grooves 2 can thereby be reduced.

Furthermore, since the volume of the air chamber is secured at the bottom of the sipe, only the area of the holes 5 is required as the area of the groove on the tread surface 1, and the area of the groove can be kept small. Pattern noise can thereby also be reduced (compared to the case in which the air chamber is provided on the tread surface).

The hole 5 being connected to the first widened portion 4a and the second widened portion 6a at the bottom side also has the following effects. In the initial stage of wear, drainage from the hole 5 to the first widened portion 4a and second widened portion 6a is promoted, thereby improving the drainage performance. After wear progresses (when the first widened portion 4a and the second widened portion 6a are exposed as the tread surface), the widened portions respectively function as a widthwise groove and a circumferential groove, thereby also improving the drainage performance after wear progresses.

The example illustrated in FIG. 3 is particularly advantageous in reducing pattern noise, because the two widthwise sipes 4 extending in the tire width direction from the two circumferential main grooves 2 are shifted in phase in the tire circumferential direction. Also, for a circumferential sipe 6 of the same circumferential length, a greater volume can be secured for the air chamber than in the embodiments of FIGS. 1 and 4, for example, since two holes 5 are included. This configuration is therefore particularly advantageous for decreasing the air column resonance sound and improving the drainage performance.

FIG. 4 is a transparent perspective view illustrating widthwise sipes, a hole, and a circumferential sipe in yet another example.

First, the hole 5 in FIG. 4 can be similar to the hole 5 of the example illustrated in FIG. 1. Hence, a description of the hole 5 is omitted.

Next, in the example illustrated in FIG. 4, the widened portion 6a of the circumferential sipe 6 is connected to one hole 5 so as to penetrate towards both sides in the tire circumferential direction, as in the case of FIG. 1. Like the example illustrated in FIG. 1, the circumferential sipe 6 includes a second widened portion 6a on the sipe bottom side, at which the sipe width is larger than on the tread surface 1 side. Since the configuration of the circumferential sipe 6 itself can be similar to the circumferential sipe 6 of the example illustrated in FIG. 1, a description is omitted.

Next, in the example illustrated in FIG. 4, the two widthwise sipes 4 are connected to respective ends of the circumferential sipe 6 in the tire circumferential direction. As a result, the two widthwise sipes 4 extending in the tire width direction from the two circumferential main grooves 2 are shifted in phase in the tire circumferential direction. Like the example illustrated in FIG. 1, the widthwise sipe 4 includes a first widened portion 4a on the sipe bottom side, at which the sipe width is larger than on the tread surface 1 side. Since the configuration of each widthwise sipe 4 itself can be similar to the widthwise sipe 4 of the example illustrated in FIG. 1, a description is omitted. In the illustrated example, the first widened portion 4a has an elliptical shape with the major axis in the tire radial direction in a cross-sectional view.

In the example illustrated in FIG. 4 as well, the hole 5, the first widened portions 4a, and the second widened portion 6a are connected. Specifically, in the example illustrated in FIG. 4, the second widened portion 6a is (directly) connected to the hole 5, and the two first widened portions 4a are each (directly) connected to the second widened portion 6a. Each of the first widened portions 4a and the hole 5 are indirectly connected via the second widened portion 6a.

With the example illustrated in FIG. 4 as well, the widthwise sipes 4, the circumferential sipe 6, and the hole 5 can function as a resonator, with the widthwise sipes 4 acting as a narrowed neck, and the space formed by the connected hole 5, first widened portions 4a, and second widened portion 6a serving the role of an air chamber. The air column resonance sound produced by the two circumferential main grooves 2 can thereby be reduced.

Furthermore, since the volume of the air chamber is secured at the bottom of the sipe, only the area of the hole 5 is required as the area of the groove on the tread surface 1, and the area of the groove can be kept small. Pattern noise can thereby also be reduced (compared to the case in which the air chamber is provided on the tread surface).

The hole 5 being connected to the first widened portions 4a and the second widened portion 6a at the bottom side also has the following effects. In the initial stage of wear, drainage from the hole 5 to the first widened portions 4a and second widened portion 6a is promoted, thereby improving the drainage performance. After wear progresses (when the first widened portions 4a and the second widened portion 6a are exposed as the tread surface), the widened portions respectively function as a widthwise groove and a circumferential groove, thereby also improving the drainage performance after wear progresses.

The example illustrated in FIG. 4 is particularly advantageous in reducing pattern noise, because the two widthwise sipes 4 extending in the tire width direction from the two circumferential main grooves 2 are shifted in phase in the tire circumferential direction.

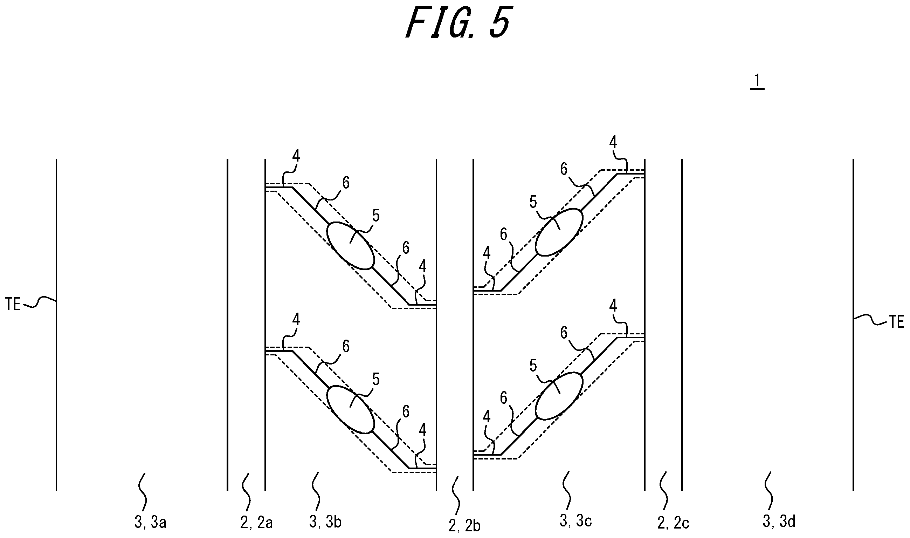

FIG. 5 is a developed view schematically illustrating a tread pattern of a pneumatic tire according to an embodiment of the present invention.

Since the configurations of the circumferential main grooves 2 and the land portions 3 can be similar to the example illustrated in FIG. 1, a description is omitted.

In the example illustrated in FIG. 5, the land portions (3b, 3c) defined by the two circumferential main grooves include widthwise sipes 4 extending in the tire width direction from each of the two circumferential main grooves 2, circumferential sipes 6 extending in the tire circumferential direction (at an inclination relative to the tire circumferential direction in the illustrated example), and holes 5 connected to the circumferential sipes 6.

First, the widthwise sipes 4 extend straight (without inclination) in the tread width direction in the illustrated example and are connected (directly) to a circumferential main groove 2 and the end of a circumferential sipe 6. The two widthwise sipes 4 connected (indirectly) to one hole 5 are shifted in phase in the tire circumferential direction so as not to overlap when projected in the tire width direction.

Next, the hole 5 has an elliptical shape in plan view. In the illustrated example, the hole 5 has an elliptical shape with the major axis in the extending direction of the circumferential sipe 6. The hole 5 is connected (directly) to two circumferential sipes 6.

Next, with regard to the circumferential sipes 6, each of two circumferential sipes 6 is connected to the end of the widthwise sipe 4 and to the hole 5. As described above, the circumferential sipe 6 is preferably inclined relative to the tire circumferential direction at an inclination angle of 45° or less, and is more preferably inclined at an inclination angle of 30° or less.

Here, the circumferential sipes 6 are inclined in opposite directions from each other (to be symmetrical about the tire equatorial plane CL) between the land portion 3b and the land portion 3c, which are located in different tire widthwise halves bounded by the tire equatorial plane CL. In the illustrated example, the widthwise sipes 4 of the land portion 3b and the widthwise sipes 4 of the land portion 3c are shifted in phase in the tire circumferential direction so as not to overlap when projected in the tire width direction.

In the embodiment illustrated in FIG. 5 as well, each widthwise sipe 4 has a first widened portion 4a (indicated by dashed lines) on the sipe bottom side, at which the sipe width is larger than on the tread surface 1 side, and each circumferential sipe 6 has a second widened portion 6a (indicated by dashed lines) on the sipe bottom side, at which the sipe width is larger than on the tread surface 1 side.

In the embodiment illustrated in FIG. 5 as well, the hole 5, the first widened portions 4a, and the second widened portions 6a are connected. Specifically, in the example illustrated in FIG. 5, each second widened portion 6a is (directly) connected to one hole 5, and the two first widened portions 4a are (directly) connected to the two respective second widened portions 6a. The first widened portions 4a and the hole 5 are indirectly connected via the second widened portions 6a.

With the embodiment illustrated in FIG. 5 as well, the widthwise sipes 4, the circumferential sipes 6, and the hole 5 can function as a resonator, with the widthwise sipes 4 acting as a narrowed neck, and the space formed by the connected hole 5, first widened portions 4a, and second widened portions 6a serving the role of an air chamber. The air column resonance sound produced by the two circumferential main grooves 2 can thereby be reduced.

Furthermore, since the volume of the air chamber is secured at the bottom of the sipe, only the area of the hole 5 is required as the area of the groove on the tread surface 1, and the area of the groove can be kept small. Pattern noise can thereby also be reduced (compared to the case in which the air chamber is provided on the tread surface).

The embodiment illustrated in FIG. 5 has a so-called directional pattern in which the circumferential sipes 6 are inclined in opposite directions from each other between the land portion 3b and the land portion 3c, which are located in different tire widthwise halves bounded by the tire equatorial plane CL, and is therefore particularly advantageous for improving the drainage performance. This embodiment is also particularly advantageous in reducing pattern noise, because the two widthwise sipes 4 extending in the tire width direction from the two circumferential main grooves 2 are shifted in phase in the tire circumferential direction.

Here, a tire radial region in which the first widened portion is located and a tire radial region in which the second widened portion is located preferably overlap at least partially (more preferably completely) in the tire radial direction. This can further improve the drainage performance.

The hole preferably includes a portion in which the diameter of the hole increases from the outside to the inside in the tire radial direction. This portion in which the diameter increases can reduce the degradation in the drainage performance when wear progresses.

While an embodiment of the present invention has been described above, the present invention is not necessarily limited to the above embodiment, but only by the appended claims. For example, the hole, the first widened portion, and the second widened portion may be connected by one first widened portion being connected (directly) to one hole, the hole and one end of the second widened portion being connected (directly), and the other end of the second widened portion and another first widened portion being connected (directly). In the examples illustrated in FIGS. 1 to 4, the land portions 3b, 3c include the widthwise sipes 4, but if the widthwise sipes are provided in any land portion defined by two circumferential main grooves, the effects of the present invention can be achieved at that land portion. Various other modifications and changes may be made within the scope of the appended claims.

### REFERENCE SIGNS LIST

- 1: Tread surface

- 2, 2a, 2b, 2c: Circumferential main groove
- 3, 3a, 3b, 3c, 3d: Land portion
- 4: Widthwise sipe
- 4a: First widened portion
- 5: Hole
- 6: Circumferential sipe
- 6a: Second widened portion
- CL: Tire equatorial plane
- TE: Tread edge

## Claims

1. A pneumatic tire comprising:
two or more circumferential main grooves (2) extending in a tire circumferential direction on a tread surface (1); and
in a land portion (3) defined by the two circumferential main grooves (2), a widthwise sipe or sipes (4) extending in a tire width direction from each of the two circumferential main grooves (2), a circumferential sipe (6) extending in the tire circumferential direction, and a hole (5) connected to the circumferential sipe (6), wherein
the or each widthwise sipe (4) is connected to the circumferential sipe (6) or the hole (5),
the or each widthwise sipe (4) includes a first widened portion (4a), on a sipe bottom side, at which a sipe width is larger than on the tread surface side,
the circumferential sipe (6) includes a second widened portion (6a), on a sipe bottom side, at which a sipe width is larger than on the tread surface side, and
the hole (5), the first widened portion (4a), and the second widened portion (6a) are connected, **characterized in that**
the hole (5) has an elliptical shape with the major axis in the extending direction of the circumferential sipe (6), and
the circumferential sipes (6) are inclined in opposite directions from each other between the land portions (3b, 3c), which are located in different tire widthwise halves bounded by the tire equatorial plane (CL).

2. The pneumatic tire of claim 1, wherein a tire radial region in which the first widened portion (4a) is located and a tire radial region in which the second widened portion (6a) is located overlap at least partially in a tire radial direction.

3. The pneumatic tire of claim 1 or 2, wherein the hole (5) includes a portion in which a diameter increases from outside to inside in a tire radial direction.

## Patentansprüche

1. Luftreifen, umfassend:
zwei oder mehr umlaufende Hauptrillen (2), die sich in einer Reifenumfangsrichtung auf einer Lauffläche (1) erstrecken; und
eine oder mehrere quer verlaufende Lamellen (4) in einem durch die zwei umlaufenden Hauptrillen (2) begrenzten Stegabschnitt (3), die sich von jeder der zwei umlaufenden Hauptrillen (2) in einer Reifenbreitenrichtung erstrecken, wobei sich eine umlaufende Lamelle (6), in der Reifenumfangsrichtung erstreckt, und ein Loch (5), das mit der umlaufenden Lamelle (6) verbunden ist, wobei
die oder jede der quer verlaufenden Lamellen (4) mit der umlaufenden Lamelle (6) oder dem Loch (5) verbunden ist,
die oder jede quer verlaufende Lamelle (4) an einer Unterseite der Lamelle einen ersten verbreiterten Abschnitt (4a) beinhaltet, an dem die Lamellenbreite größer ist als an der Laufflächenseite,
die umlaufende Lamelle (6) an einer Unterseite der Lamelle einen zweiten verbreiterten Abschnitt (6a) beinhaltet, an dem die Lamellenbreite größer ist als an der Laufflächenseite, und
das Loch (5), der erste erweiterte Abschnitt (4a) und der zweite erweiterte Abschnitt (6a) miteinander verbunden sind, **dadurch gekennzeichnet, dass**
das Loch (5) eine elliptische Form aufweist, wobei die Hauptachse in der Erstreckungsrichtung der Umfangsrille (6) verläuft, und
die umlaufenden Lamellen (6) zwischen den Stegabschnitten (3b, 3c), die sich in verschiedenen Reifenbreitenhälften befinden, die durch die Reifenäquatorialebene (CL) begrenzt sind, in entgegengesetzte Richtungen geneigt sind.

2. Luftreifen nach Anspruch 1, wobei sich ein Reifenradiusbereich, in dem sich der erste verbreiterte Abschnitt (4a) befindet, und ein Reifenradiusbereich, in dem sich der zweite verbreiterte Abschnitt (6a) befindet, zumindest teilweise in einer Reifenradiusrichtung überlappen.

3. Luftreifen nach Anspruch 1 oder 2, wobei das Loch (5) einen Abschnitt beinhaltet in dem sich der Durchmesser von außen nach innen in radialer Richtung des Reifens vergrößert.

## Revendications

1. Pneumatique comprenant :
deux ou plusieurs rainures principales circonférentielles (2) s'étendant dans la direction circonférentielle sur une surface de bande de roulement (1) ; et
dans une portion de terrain (3) définie par les deux rainures principales circonférentielles (2), une ou plusieurs lamelles transversales (4) s'étendant dans le sens de la largeur du pneu à partir de chacune des deux rainures principales circonférentielles (2), une lamelle circonférentielle (6) s'étendant dans le sens circonférentiel du pneu et un trou (5) relié à la lamelle circonférentielle (6), dans lequel
la ou les lamelle(s) transversale(s) (4) est (sont) reliée(s) à la lamelle circonférentielle (6) ou au trou (5),
la ou chaque lamelle transversale (4) inclut une première partie élargie (4a), sur le côté inférieur de la lamelle, au niveau duquel la largeur de la lamelle est plus grande que sur le côté de la surface de la bande de roulement,
la lamelle circonférentielle (6) inclut une seconde portion élargie (6a), sur la face inférieure de la lamelle, au niveau de laquelle la largeur de la lamelle est plus grande que sur la face de la bande de roulement, et
le trou (5), la première partie élargie (4a) et la seconde partie élargie (6a) sont reliés, **caractérisés en ce que**
le trou (5) présente une forme elliptique dont le grand axe est orienté dans la direction d'extension de la rainure circonférentielle (6), et
les lamelles circonférentielles (6) sont inclinées dans des directions opposées l'une par rapport à l'autre entre les portions terrestres (3b, 3c), qui sont situées dans différentes moitiés de largeur du pneu délimitées par le plan équatorial du pneu (CL).

2. Pneumatique selon la revendication 1, dans lequel une région radiale du pneu dans laquelle se trouve la première partie élargie (4a) et une région radiale du pneu dans laquelle se trouve la seconde partie élargie (6a) se chevauchent au moins partiellement dans une direction radiale du pneu.

3. Pneumatique selon la revendication 1 ou 2, dans lequel le trou (5) inclut une partie dans laquelle un diamètre augmente de l'extérieur vers l'intérieur dans une direction radiale du pneu.
